# EUROPEAN PATENT SPECIFICATION

(11) **EP 4 190 180 B1**
(45) Date of publication and mention of the grant of the patent: **25.03.2026**
(21) Application number: 21849354.2
(22) Date of filing: 30.07.2021
(51) Int. Cl.: A24F 40/42, A24F 40/70

(54) **CARTRIDGE FOR FLAVOR INHALER**
KARTUSCHE FÜR GESCHMACKSINHALATOR
CARTOUCHE POUR INHALATEUR D'ARÔME

(30) Priority: 30.07.2020 WO PCT/JP2020/029301
(43) Date of publication of application: 07.06.2023
(73) Proprietor: Japan Tobacco Inc., Tokyo 105-6927 (JP)
(72) Inventor: OKAMOTO, Hiroshi, Tokyo 130-8603 (JP)
(74) Representative: Hoffmann Eitle
(86) International application number: PCT/JP2021/028225
(87) International publication number: WO 2022/025217

(56) References cited:
- WO-A1-2010/113702
- WO-A1-2013/122054
- WO-A1-2019/162498
- WO-A1-2019/220904
- JP-A- 2018 511 337
- US-A1- 2020 037 669
- US-A1- 2020 120 981

## Description

### TECHNICAL FIELD

The present invention relates to a flavor inhaler cartridge.

### BACKGROUND ART

In the related art, flavor inhalers for inhaling flavors and the like without burning any materials are known. As such a flavor inhaler, a smoking material heating apparatus that forms aerosols by heating a smoking material made of tobacco containing a volatile component, for example, is known. As such a smoking material, a consumable supply including a slab-shaped tobacco, a spacer, and a filter is known (see WO 2019/162497). US 2020/120981 A1 discloses a flavor generating segment comprising first and second flavor generating members wherein at least one of the members includes a plurality of stacked flavor generating sheets and a non-contact part in which the flavor generating sheets do not come into contact with one another. WO 2013/122054 A1 discloses a non-heated flavor suction device including an airflow channel between sheets of the device. US 2020/0037669 A1 discloses a vaporizer cartridge including a heating element sheet formed in a spiral shape. WO 2019/162498 A1 discloses a heat-not-burn product comprising two planar slabs spaced apart from one another to define a planar recess.

### SUMMARY OF INVENTION

### TECHNICAL PROBLEM

An object of the present invention is to provide a cartridge with new structures.

### SOLUTION TO PROBLEM

According to a first aspect, there is provided a flavor inhaler cartridge according to claim 1. The cartridge includes: a raw material sheet that includes a base material layer and a raw material layer laminated on the base material layer; and a case that accommodates the raw material sheet therein. The raw material sheet includes a first end portion, which is folded along a first folding line such that the raw material layer faces itself, at which the first folding line is located, and a second end portion on a side opposite to the first end portion. A clearance formed by the base material layer facing itself extends from the first end portion. The case includes a first end surface provided with a heating opening and a second end surface facing the first end surface and provided with a mouthpiece-side opening. The raw material sheet is disposed inside the case such that the first end portion faces the first end surface.

According to the first aspect, the first end portion from which the clearance extends is directed to the first end surface provided with the heating opening, and the clearance is thus exposed to the heating opening. Therefore, a heating portion is easily inserted into the clearance where the base material layer faces itself when a heating blade or a susceptor of the heating portion of the flavor inhaler is inserted from the heating opening. In this case, it is possible to efficiently heat the raw material layer without bringing the heating blade or the susceptor into contact with the raw material layer, by heating the raw material sheet with the heating blade, the susceptor, or the like of the heating portion disposed in the clearance where the base material layer faces itself. In this manner, contamination of the heating blade or the susceptor with the raw material layer is curbed, and it is possible to reduce a frequency of cleaning of the heating blade or the susceptor. Also, vapor or aerosols generated from the raw material layer can pass through the clearance where the raw material layer faces itself. It is thus possible to efficiently deliver the vapor or the aerosols generated from the raw material layer to the downstream side.

According to a gist of a second aspect, in the first aspect, the raw material sheet is disposed inside the case such that the first folding line is substantially orthogonal to a longitudinal direction connecting the first end surface and the second end surface.

According to the second aspect, the first folding line is substantially orthogonal to the longitudinal direction, and it is thus possible to facilitate insertion of the heating blade or the susceptor of the heating portion into the clearance along the first folding line.

According to a gist of a third aspect, in the first aspect or the second aspect, the case includes a first wall, a second wall that faces the first wall, and a pair of connecting walls that connect the first wall to the second wall, and air flow paths are provided between the raw material sheet and the connecting walls.

According to the third aspect, vapor or aerosols generated by the raw material layer can be sent to the mouthpiece-side opening through the air flow paths between the raw material sheet and the connecting walls. It is thus possible to efficiently send the vapor or the aerosols toward the mouthpiece-side opening.

In a fourth aspect, in the third aspect, the connecting walls are formed into arc shapes in a section seen from the heating opening.

According to the fourth aspect, the connecting walls have arc-shaped sections, a stress applied to the connecting walls is thus dispersed, and it is possible to enhance strength of the case as compared with a case in which the first wall and the second wall are connected with flat walls.

According to a gist of a fifth aspect, in any of the first to fourth aspects, the raw material sheet is folded along a second folding line such that the base material layer faces itself, and the second folding line is located at the second end portion.

According to the fifth aspect, it is possible to form the clearance where the base material layer facing itself from a single raw material sheet.

According to a gist of a sixth aspect, in the fifth aspect, the raw material sheet includes a mesh or an opening at the second folding line.

According to the sixth aspect, air or vapor or aerosols generated by the raw material layer can be sent to the mouthpiece-side opening through the mesh or the opening. It is thus possible to efficiently send the vapor or the aerosols toward the mouthpiece-side opening.

According to a gist of a seventh aspect, in any of the first to sixth aspects, the raw material sheet is further folded along a third folding line such that the raw material layer faces itself, and the clearance is provided between the first folding line and the third folding line.

According to the seventh aspect, the clearance where the base material layer faces itself is located between the pair of clearances where the raw material layer faces itself. Therefore, it is possible to uniformly heat the raw material layer by disposing the heating blade or the susceptor of the heating portion in the clearance where the base material layer faces itself, and as a result, it is possible to uniformize aerosols generated from each of the pair of clearances where the raw material layer faces itself.

According to a gist of an eight aspect, in the seventh aspect citing the fifth aspect, the raw material sheet includes a pair of inner folded portions that are folded along the first folding line and the third folding line and are located inside the raw material sheet and a pair of outer folded portions that are folded along the second folding line located between the first folding line and the third folding line and are located outside the raw material sheet.

According to the eighth aspect, the raw material sheet is folded such that the raw material layer is located inside, and it is thus possible to curb overflow of the raw material from the raw material sheet. Also, since the first end portion of the raw material sheet faces the first end surface of the case, the second end portion faces the second end surface. Therefore, the second folding line at the second end portion faces the second end surface, exposure of the clearance where the raw material layer faces itself to the mouthpiece-side opening is curbed, and the overflow of the raw material to the mouthpiece-side opening can thus be curbed.

According to a gist of a ninth aspect, in the eighth aspect, a size of the clearance between the first folding line and the third folding line is larger than a size of the clearance between the first folding line or the second folding line of the pair of inner folded portions and an end portion on an opposite side.

According to the ninth aspect, a relatively large clearance is formed between the first folding line and the second folding line, and insertion of the heating blade or the susceptor into a part of the relatively large clearance is thus facilitated.

According to a gist of a tenth aspect, in any of the first to ninth aspects, the raw material sheet includes a first sheet and a second sheet including the first folding line, and the clearance is formed between the first sheet and the second sheet.

According to a further aspect, there is provided a flavor inhaler cartridge according to claim 10. In this manner, it is possible to supply various combinations of flavors to a user and to provide new smoke tastes to the user by adopting a sheet including raw material layers containing mutually different components.

According to a gist of an eleventh aspect, in the preceding aspect, the raw material sheet includes a third sheet including the first folding line, and the clearance is formed between the first sheet and the third sheet, and the second sheet and the third sheet are disposed to be adjacent to each other.

According to the eleventh aspect, it is possible to supply more combinations of flavors to a user and to provide new smoke tastes to the user.

### BRIEF DESCRIPTION OF DRAWINGS

Fig. 1 is a schematic side view of a flavor inhaler using a cartridge according to the present embodiment.
Fig. 2 is a perspective view of the cartridge.
Fig. 3 is an enlarged sectional view of a part of a raw material sheet.
Fig. 4 is a diagram illustrating an example of a section of the raw material sheet in a state in which the raw material sheet is accommodated in a case.
Fig. 5 is a diagram illustrating another example of the section of the raw material sheet in the state in which the raw material sheet is accommodated in the case.
Fig. 6 is a diagram illustrating yet another example of the section of the raw material sheet in the state in which the raw material sheet is accommodated in the case.
Fig. 7 is a side view of the cartridge seen from a first opening.
Fig. 8 is a schematic sectional view illustrating a cartridge 10 cut along a longitudinal direction.
Fig. 9 is a schematic side sectional view illustrating a cartridge according to another embodiment.
Fig. 10 is a schematic side view illustrating a cartridge according to another embodiment.
Fig. 11A is a perspective view illustrating a cartridge according to another embodiment.
Fig. 11B is a schematic sectional view of a cartridge seen along the arrow 10B-10B illustrated in Fig. 11A.
Fig. 12 is a schematic sectional view illustrating a cartridge according to another embodiment.
Fig. 13 is a schematic sectional view illustrating a cartridge according to anther embodiment.
Fig. 14 is a schematic sectional view illustrating a cartridge according to another embodiment.
Fig. 15 is a schematic side view illustrating a cartridge according to another embodiment.

### DESCRIPTION OF EMBODIMENTS

Hereinafter, embodiments of the present invention will be described with reference to the drawings. The same reference signs will be applied to the same or corresponding components in the drawings which will be described below, and repeated description will be omitted.

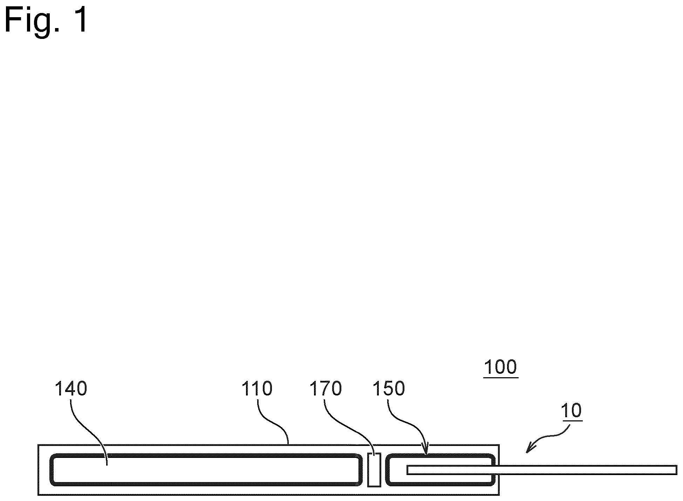

FIG. 1 is a schematic side view of a flavor inhaler using a cartridge according to the present embodiment. A flavor inhaler 100 according to the present embodiment is configured to generate aerosols including a flavor by heating a cartridge 10. As illustrated in the drawing, the flavor inhaler 100 incudes a housing 110, a battery 140 disposed inside the housing 110, a heating portion 150, and a control circuit 170. An end portion of the housing 110 of the flavor inhaler 100 on the side of the heating portion 150 opens such that the cartridge 10 can be inserted into the heating portion 150.

The battery 140 is configured to supply electric power to the heating portion 150, the control circuit 170, and the like. For example, the battery 140 is a lithium ion battery. The battery 140 may be able to be charged with an external power source.

The heating portion 150 can have a heating blade that is inserted into the cartridge 10. In other words, the heating portion 150 may be an internal heating-type heater that heats the cartridge 10 from the inside. The heating blade includes a substrate of a resin, for example, and a heating track formed on the surface of the substrate and can have a thickness of equal to or greater than about 0.5 mm and equal to or less than about 1.5 mm, for example. Also, the heating portion 150 may include an induction coil for induction-heating a susceptor. The susceptor may be provided in the flavor inhaler 100 or may be provided in the cartridge 10. For example, the flavor inhaler 100 may include a susceptor inserted into the cartridge 10 when the cartridge 10 is disposed in the heating portion 150. Alternatively, the cartridge 10 may include a conductive material that is induction-heated by the induction coil. Note that the flavor inhaler 100 illustrated in Fig. 1 may include an electromagnetic shield (not illustrated) that curbs arrival of electromagnetic waves generated by the induction coil at the control circuit 170, between the heating portion 150 and the control circuit 170. The heating portion 150 is configured to heat the cartridge 10 to a temperature of equal to or greater than 200°C and equal to or less than 350°C, for example.

The control circuit 170 is configured of a CPU, a memory, and the like and controls operations of the flavor inhaler 100. For example, the control circuit 170 starts heating of the cartridge 10 in response to a user's operation on an input device such as a press button or a slide-type switch, which is not illustrated, and ends the heating of the cartridge 10 after a specific period of time elapses. The control circuit 170 may end the heating of the cartridge 10 even before the specific period of time elapses from the start of the heating of the cartridge 10 in a case in which the number of times the user performs a puffing action exceeds a specific value. For example, the puffing action is detected by a sensor, which is not illustrated.

Alternatively, the control circuit 170 may start the heating of the cartridge 10 in response to a start of the puffing action and end the heating of the cartridge 10 in response to an end of the puffing action. The control circuit 170 may end the heating of the cartridge 10 even before the puffing action is ended, in a case in which a specific period of time elapses after the start of the puffing action. In the illustrated example, the control circuit 170 is disposed between the battery 140 and the heating portion 150 and curbs heat transmission from the heating portion 150 to the battery 140.

The cartridge 10 generates vapor or aerosols of an aerosol source or a flavor source by being heated by the heating portion 150. The vapor or the aerosols generated inside the cartridge 10 are cooled by passing through the cartridge 10 and then reach the inside of a user's mouth. The vapor generated in the cartridge 10 can be cooled and formed into aerosol particles by passing through the cartridge 10. In the present embodiment, the cartridge 10 has a flat shape and has a thin plate shape or card shape in a state in which the heating portion 150 is inserted thereinto.

The flavor inhaler 100 may include a mouthpiece. In this case, the flavor inhaler 100 is configured to accommodate the cartridge 10 therein, and the vapor or the aerosols generated in the cartridge 10 are supplied to the user through the mouthpiece.

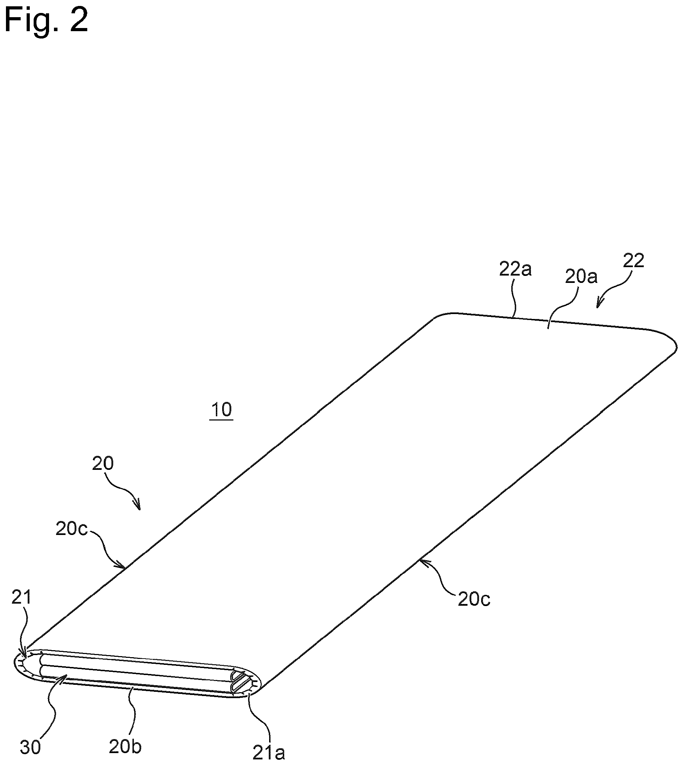

Next, the cartridge 10 will be described in detail. Fig. 2 is a perspective view of the cartridge 10. The cartridge 10 includes a raw material sheet 30 that generates aerosols by being heated and a case 20 that accommodates the raw material sheet 30 therein. The cartridge 10 illustrated in Fig. 2 does not include a filter and includes only the raw material sheet 30. Therefore, since the configuration of the cartridge 10 is simple, it is easy to successively manufacture the cartridge 10, and it is possible to relatively reduce the weight of waste of the cartridge 10 after use.

The case 20 has a thin substantially tubular shape and includes a first wall 20a, a second wall 20b, and a pair of connecting walls 20c. The first wall 20a is a wall having the largest plane of the case 20. The second wall 20b faces the first wall 20a. The pair of connecting walls 20c connect the first wall 20a to the second wall 20b. Specifically, one of the connecting walls 20c extends between one end of the first wall 20a and one end of the second wall 20b, and the other one of the connecting walls 20c extends between the other end of the first wall 20a and the other end of the second wall 20b. Therefore, the substantially tubular case 20 is formed by the first wall 20a, the second wall 20b, and the pair of connecting walls 20c, and one or more air flow paths through which the aerosols pass as will be described later are provided inside the case 20.

Also, the case 20 includes a first opening 21 (corresponding to an example of a heating opening), a second opening 22 (corresponding to an example of a mouthpiece-side opening) that faces the first opening 21, a first end surface 21a provided with the first opening 21, and a second end surface 22a provided with the second opening 22. The first opening 21 and the second opening 22 are defined by a first wall 20a, a second wall 20b, and a pair of connecting walls 20c. The aforementioned heating blade or the susceptor of the heating portion 150 can be inserted into the first opening 21. The first opening 21 and the second opening 22 can have substantially the same opening shapes. The inside of the case 20 on the side of the second end surface 22a is hollow such that aerosols directed from the raw material sheet 30 toward the second opening 22 can pass through the hollow. The second opening 22 may configure the mouthpiece or may communicate with the mouthpiece provided in the flavor inhaler 100. The second opening 22 is located on the side further downstream than the first opening 21, that is, on the side of the mouthpiece.

The thickness of the case 20 (the length between the outer side surface of the first wall 20a and the outer side surface of the second wall 20b) can ranges from about 1.5 mm to about 6.0 mm, for example. The length of the case 20 (the length between the first end surface 21a and the second end surface 22a) is equal to or greater than 20mm and equal to or less than 100 mm, for example. The width of the case 20 (the length that is orthogonal to the thickness direction and the length direction) ranges, for example, from about 10 mm to about 20 mm. The case 20 can be formed of a predetermined cardboard, for example. Specifically, the case 20 can be formed of a paper with a paper weight of equal to or greater than 80 g/m² and equal to or less than 300 g/m², for example.

It is possible to remove the cartridge 10 from the heating portion 150 without the user directly touching the raw material sheet 30 at a high temperature after use, by the raw material sheet 30 being accommodated in the case 20. Also, it is possible to maintain the shape of the raw material sheet 30, which is relatively easily deformed, by the raw material sheet 30 being accommodated in the case 20, and the size of a first clearance 34 or second clearances 33 included in the raw material sheet 30, which will be described later, is easily maintained to be constant. Furthermore, it is possible to absorb a part of vapor or aerosols generated from the raw material sheet 30 by the case 20 being formed of a paper and to curb condensation of the vapor or the aerosols inside the flavor inhaler 100.

Also, the inner surface of the case 20 may be provided with a metal foil such as aluminum. In this manner, it is possible to curb heat dissipation caused by heat emission of the heating portion 150 and the raw material sheet 30 heated by the heating portion 150 and to efficiently heat the raw material sheet 30. Specifically, a part of the case 20 where the raw material sheet 30 is disposed (that is, a part where the heating portion 150 is located) is not provided with the metal foil, and it is thus possible that the inner surface of the case 20 on the downstream side may be provided with the metal foil. It is thus possible to promote cooling of the vapor generated by the raw material sheet 30, that is, formation of aerosols. Note that if the inner surface of the case 20 at the part where the raw material sheet 30 is disposed is also provided with the metal foil, the heat of the raw material sheet 30 is transmitted to the downstream side of the metal foil, and there is thus a concern that the vapor cannot sufficiently be cooled on the downstream side of the raw material sheet 30. On the other hand, a part of the case 20 where the raw material sheet 30 is disposed (that is, a part where the heating portion 150 is located) may also be provided with the metal foil. In this case, the heat of the heating portion 150 is transmitted to the inner surface of the case 20 on the downstream side by the metal foil continuing from the part where the raw material sheet 30 is disposed (that is, the part where the heating portion 150 is located) to the downstream side thereof, and it is thus possible to curb condensation of the vapor or the aerosols on the inner surface of the case 20.

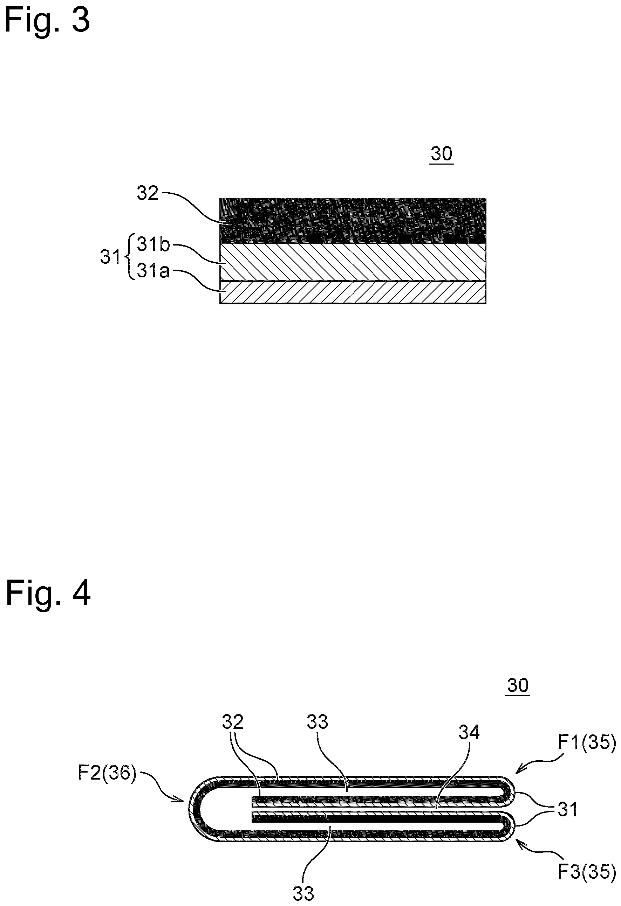

The raw material sheet 30 in the present embodiment includes a sheet including folding lines. Fig. 3 is an enlarged sectional view of a part of the raw material sheet 30. As illustrated in the drawing, the raw material sheet 30 includes a base material layer 31 and a raw material layer 32 laminated on the base material layer 31. In the present embodiment, the base material layer 31 includes a conductive layer 31a that contains a conductive material and a paper layer 31b that is laminated on the conductive layer 31a. Specifically, the base material layer 31 can be a metal attached paper formed by attaching the conductive layer 31a to the paper layer 31b. As the conductive material, it is possible to use a known material such as aluminum, stainless steel, carbon, iron, an alloy containing iron, an alloy containing iron and nickel, an alloy containing iron, nickel and chromium, an alloy containing iron, nickel, chromium, and manganese, an alloy containing iron, nickel, chromium, manganese, and silicon, or the like. It is possible to efficiently transmit the heat of the heating portion 150 to the raw material layer 32 by the base material layer 31 including the conductive layer 31a. Also, it is also possible to utilize the conductive layer 31a as a susceptor for induction-heating by the base material layer 31 including the conductive layer 31a. As illustrated in the drawing, the raw material layer 32 is provided on the paper layer 31b of the base material layer 31 in the raw material sheet 30 in the present embodiment. It is thus possible to cause the raw material layer 32 to adhere to the base material layer 31 without using an adhesive as will be described later. Although the base material layer 31 includes the conductive layer 31a in the present embodiment, the present invention is not limited thereto, and the base material layer 31 may not include the conductive layer 31a.

The paper layer 31b can be a paper such as a pulp paper, for example. Also, in the present embodiment, the paper layer 31b can contain a fiber layer of a non-woven cloth or the like that does not contain tobacco fiber. Although the thickness of the paper layer 31b can be arbitrarily determined, the thickness is preferably equal to or greater than 0.03 mm and equal to or less than 0.15 mm. If the thickness of the paper layer 31b falls within this range, it is possible to efficiently heat the raw material sheet 30 in the flavor inhaler 100 while securing the strength of the raw material sheet 30. If the thickness of the paper layer 31b is less than 0.03 mm, the strength of the raw material sheet 30 decreases, and the raw material sheet 30 can be more likely to break. Also, if the thickness of the paper layer 31b exceeds 0.15 mm, the paper layer 31b becomes excessively thick, the heat of the heating portion 150 in the flavor inhaler 100 is used to heat the paper layer 31b, and heating efficiency of the raw material sheet 30 may be degraded.

Also, although the paper weight of the paper layer 31b can be arbitrarily determined, the paper weight is preferably equal to or greater than 20 g/m² and equal to or less than 100 g/m². If the paper weight of the paper layer 31b falls within this range, it is possible to efficiently heat the raw material sheet 30 in the flavor inhaler 100 while securing the strength of the raw material sheet 30. If the paper weight of the paper layer 31b is less than 20 g/m², the strength of the raw material sheet 30 decreases, and the raw material sheet 30 can be more likely to break. Also, if the paper weight of the paper layer 31b exceeds 100 g/m², the heat of the heater in the flavor inhaler 100 is used to heat the paper layer 31b, and heating efficiency of the raw material sheet 30 may be degraded. The paper weight of the paper layer 31b is more preferably equal to or greater than 30 g/m² and equal to or less than 50 g/m².

The thickness of the conductive layer 31a is preferably equal to or greater than 5 µm and equal to or less than 30 µm. If the thickness of the conductive layer 31a falls within this range, it is possible to achieve appropriate heat transmission while reducing the amount of used conductive material. Also, the conductive layer 31a can function as an appropriate susceptor when it is induction-heated by the induction coil at the heating portion 150 in the flavor inhaler 100. Furthermore, it is possible to curb an excessive increase in resistance at the time of cutting or bending of the raw material sheet 30. The thickness of the conductive layer 31a is more preferably equal to or greater than 5 µm and equal to or less than 15 µm, and specifically, the thickness can be about 10 µm.

The raw material layer 32 is not attached to the base material layer 31 via an adhesive such as glue but may be formed integrally with the base material layer 31 by being applied to the paper layer 31b of the base material layer 31. Although the raw material layer 32 may be attached to the base material layer 31 via an adhesive such as glue, attachment with no intervention of any adhesive is preferably adopted in terms of a smoke taste and simplification of a process of manufacturing the raw material sheet 30. The raw material layer 32 can be a tobacco sheet including, for example, tobacco, a polyhydric alcohol, and the like. The polyhydric alcohol can include glycerin, propylene glycol, sorbitol, xylitol, and erythritol. One of these polyhydric alcohols may be used alone, or two or more kinds thereof may be used in combination, for the raw material layer 32. Specifically, the raw material layer 32 can be formed by mixing a binder into powder tobacco and a polyhydric alcohol, applying the mixture to the paper layer 31b of the base material layer 31, and then evaporating a part of moisture thereof. As the binder, it is possible to use, for example, guar gam, xanthan gum, carboxy methyl cellulose (CMC), a sodium salt of carboxy methyl cellulose (CMC-Na), pullulan and hydroxypropyl cellulose (HPC), methyl cellulose, or hydroxyl methyl cellulose.

Also, pulp may be added to the raw material layer 32. The pulp can improve strength of the raw material layer 32. However, pulp may not be added to the raw material layer 32 when there is no need to improve the strength of the raw material layer 32. In a case in which pulp is not used, the proportion of the tobacco in the raw material layer 32 increases by the corresponding amount, and an improvement in smoke tastes is thus expected.

Although the binder can be added to the raw material layer 32 for the purpose of controlling appropriate application of the raw materials, the binder may not be added. The percentage by weight of the binder that can be added to the raw material layer 32 is preferably equal to or greater than 0% and equal to or less than 60% and is more preferably equal to or greater than 0% and equal to or less than 10% with respect to the weight of the raw material layer 32, for example.

The raw material layer 32 can have blending rates (percentages by weight) of 5% to 40% of polyhydric alcohol, 50% to 90% of tobacco, 0% to 10% of binder, and 0% to 10% of pulp, for example. Also, an acid such as lactic acid, palmitic acid, or benzoic acid may be added to the raw material layer 32.

Also, the raw material sheet 30 preferably has a tensile strength of equal to or greater than 3.0 N/15 mm, more preferably has a tensile strength of equal to or greater than 5.0 N/15 mm, and further preferably has a tensile strength of equal to or greater than 10 N/15 mm in terms of the manufacturing. Note that the tensile strength of the raw material sheet 30 can be measured by performing a dry tensile strength test (ISO 1924-2) on a test piece of 250 mm × 15 mm. It is possible to easily fold the raw material sheet 30 when the raw material sheet 30 is manufactured as will be described later and to curb breaking of the raw material sheet 30, by the raw material sheet 30 having the above tensile strength.

Even if the base material layer 31 does not include the paper layer 31b, it is possible to select types and blending rates of raw materials such that the raw material layer 32 can be applied to the conductive layer 31a of the base material layer 31. On the other hand, it is possible to improve fixability of the raw material layer 32 to the base material layer 31 by the base material layer 31 including the paper layer 31b as described above. Specifically, appropriate application and adhesiveness of the raw material layer 32 to the base material layer 31 can be improved by the base material layer 31 including the paper layer 31b. The reason is considered to be because affinity between the paper layer 31b and the raw materials is high and adhesiveness is enhanced by the raw materials being entangled with minute irregularity of the fiber on the surface of the paper layer 31b. Also, the paper layer 31b functions as a cushion material at the time of drying and can secure flexibility of the raw material sheet 30 including the raw material layer 32 and the base material layer 31.

Also, the raw material layer 32 may be a non-tobacco sheet including an aerosol source, for example, as well as the aforementioned tobacco sheet. The non-tobacco sheet means non-tobacco raw materials formed into a sheet shape and may contain a tobacco raw material. Specifically, the raw material layer 32 can include non-tobacco fiber such as pulp fiber or a non-woven fabric and an aerosol source. The non-tobacco fiber used for the non-tobacco sheet may include non-pulp fiber. The non-pulp fiber is fiber other than pulp fiber. The pulp fiber is a group of cellulose fiber extracted from a plant such as a wood material and is typically used as a raw material for paper. Examples of the pulp fiber include waste paper pulp, chemical pulp, mechanical pulp, and the like.

The non-tobacco sheet may include a binder. The binder is an adhesive for binding the fiber and the like. As the binder, a binder known in the field can be used. The non-tobacco sheet may include an emulsifier. The emulsifier enhances affinity between a lipophilic aerosol generating base material and hydrophilic non-valve fiber. A known emulsifier can be used, and examples thereof include an emulsifier with an HLB value of 8 to 18.

The aerosol source is a material that is gasified through heating, is then cooled, and thereby generates aerosols or a material that generates aerosols through atomization. A known aerosol source can be used, and examples thereof include polyhydric alcohols such as glycerin and propylene glycol (PG), triethyl citrate (TEC), and triacetin. The aerosol source can also be added to the raw material layer 32 of the aforementioned tobacco sheet.

The non-tobacco sheet may include a flavor generating base material. The flavor generating base material is a material that provides a flavor and a smoke taste and is preferably a tobacco material. Specific examples of the tobacco material include chopped dried tobacco leaves, ground leaf tobacco, and a tobacco extract (an extract using water, an organic solvent, or a mixture thereof). The ground leaf tobacco means particles obtained by grinding leaf tobacco. An average particle diameter of the ground leaf tobacco can be, for example, 30 to 120 µm. The grinding can be performed using a known grinding machine and may be dry grinding or wet grinding. Therefore, the ground leaf tobacco is also referred to as leaf tobacco particles. In the present embodiment, the average particle diameter is obtained by a laser diffraction scattering method, and specifically, it is measured using a laser diffraction-type particle diameter distribution measurement apparatus (for example, LA-950 available from Horiba Ltd.). Also, the type of tobacco is not limited, and it is possible to use a yellow cultivar, a Burley cultivar, an orient cultivar, a local cultivar, and other cultivars such as Nicotiana tabacum breeds and Nicotiana rustica breeds. Although the amount of flavor generating base material in the non-tobacco sheet is not particularly limited, the amount is preferably 1 to 30% by weight and is more preferably 10 to 20% by weight.

The non-tobacco sheet may include a flavoring. The flavoring is a substance that provides a flavor and a taste. The flavoring may be a natural flavoring or a synthetic flavoring. One kind of flavoring may be used, or a mixture of a plurality of types of flavorings may be used, as the flavoring. It is possible to use, as the flavoring, an arbitrary flavoring that is typically used in a smoking product, and specific examples thereof will be described later. The flavoring can be included in the non-tobacco sheet in such an amount that the smoking product can provide a favorable flavor and taste, and for example, the amount thereof is preferably 1 to 30% by weight and is more preferably 10 to 20% by weight in the non-tobacco sheet.

As the flavoring, it is possible to use any flavoring as long as the flavoring is typically used, such as an essential oil, a natural flavoring, or a synthetic flavoring, for example. Also, the flavoring may be a liquid or a solid and may be in any form. Suitable examples of flavor include tobacco extracts and tobacco components, sugar and sugar-based flavors, licorice, cocoa, chocolate, fruit juices and fruits, spices, western liquors, herbs, vanilla, a flavoring selected from flower-based flavors, and combinations thereof. Specific examples include a flavoring selected from isothiocyanates, indole and derivatives thereof, ethers, esters, ketones, fatty acids, aliphatic higher alcohols, aliphatic higher aldehydes, aliphatic higher hydrocarbons, thioethers, thiols, terpene-based hydrocarbons, phenol ethers, phenols, furfural and derivatives thereof, aromatic alcohols, aromatic aldehydes, lactones, and the like or a combination thereof.

It is also possible to use a wide range of flavoring components as described in "Collection of Well-known Prior Arts (flavorings)" (March 14, 2007; issued by Patent Office), "SAISHIN KORYO NO JITEN (popular edition)" (February 25, 2012; edited by Soichi Arai, Akio Kobayashi, Izumi Yajima, Michiaki Kawasaki; Asakura Publishing Co., Ltd.), and "Tobacco Flavoring for Smoking Products" (June 1972, R.J. REYNOLDS TOBACCO COMPANY), for example.

In terms of application of satisfactory smoking taste, examples thereof include acetoanisole, acetophenone, acetylpyrazine, 2-acetylthiazole, alfalfa extract, amyl alcohol, amyl butyrate, trans-anethole, star anise oil, apple juice, Peru Balsam oil, beeswax absolute, benzaldehyde, benzoin resinoid, benzyl alcohol, benzyl benzoate, benzyl phenylacetate, benzyl propionate, 2,3-butanedione, 2-butanol, butyl butyrate, butyric acid, caramel, cardamom oil, carob absolute, β-carotene, carrot juice, L-carvone, β-caryophyllene, cassia oil, cedar wood oil, celery seed oil, chamomile oil, cinnamaldehyde, cinnamic acid, cinnamyl alcohol, cinnamyl cinnamate, citronella oil, DL-citronellol, clary sage extract, cocoa, coffee, cognac oil, coriander oil, cumin aldehyde, davana oil, δ-decalactone, γ-decalactone, decanoic acid, dill herb oil, 3,4-dimethyl-1,2-cyclopentanedione, 4,5-dimethyl-3-hydroxy-2,5-dihydrofuran-2-on, 3,7-dimethyl-6-octenoic acid, 2,3-dimethylpyrazine, 2,5-dimethylpyrazine, 2,6-dimethylpyrazine, 2-ethyl methylbutyrate, ethyl acetate, ethyl butyrate, ethyl hexanoate, ethyl isovalerate, ethyl lactate, ethyl laurate, ethyl levulinate, ethyl maltol, ethyl octanoate, ethyl oleate, ethyl palmitate, ethyl phenylacetate, ethyl propionate, ethyl stearate, ethyl valerate, ethyl vanillin, ethyl vanillin glucoside, 2-ethyl-3,(5 or 6)-dimethylpyrazine, 5-ethyl-3-hydroxy-4-methyl-2(5H)-furanone, 2-ethyl-3-methylpyrazine, eucalyptol, fenugreek absolute, gene absolute, gentian root infusion, geraniol, geranyl acetate, grape juice, guaiacol, guava extract, γ-heptalactone, γ-hexalactone, hexanoic acid, cis-3-hexene-1-ol, hexyl acetate, hexyl alcohol, hexyl phenylacetate, honey, 4-hydroxy-3-pentenoic acid lactone, 4-hydroxy-4-(3-hydroxy-1-butenyl)-3,5,5-trimethyl-2-cyclohexene-1-on, 4-(para-hydroxyphenyl)-2-butanone, 4-hydroxyundecanoic acid sodium, immoltel absolute, β-ionone, isoamyl acetate, isoamyl butyrate, isoamyl phenylacetate, isobutyl acetate, isobutyl phenyl acetate, jasmine absolute, kola nut tincture, labdanum oil, lemon terpeneless oil, glycyrrhiza extract, linalool, linalyl acetate, lovage root oil, maltol, maple syrup, menthol, menthone, acetic acid L-menthyl, paramethoxybenzaldehyde, methyl-2-pyrrolylketone, methyl anthranilate, methyl phenylacetate, methyl salicylate, 4'-methylacetophenone, methylcyclopentenolone, 3-methyl valeic acid, mimosa absolute, molasse, myristic acid, Nellore, nerolidol, γ-nonalactone, nutmeg oil, δ-octalactone, octanal, octanoic acid, orange flower oil, orange oil, orris root oil, palmitic acid, ω-pentadecalactone, peppermint oil, petitgrain Paraguay oil, phenethyl alcohol, phenethyl phenylacetate, phenyl acetic acid, piperonal, plum extract, propenyl guaetol, propyl acetate, 3-propylidene phthalide, prune juice, pyruvic acid, raisin extract, rose oil, rum, sage oil, sandalwood oil, spearmint oil, styrax absolute, marigold oil, tea distillate, α-terpineol, terpinyl acetate, 5,6,7,8-tetrahydroquinoxaline, 1,5,5,9-tetramethyl-13-oxacyclo(8,3,0,0(4,9))tridecane, 2,3,5,6-tetramethylpyrazine, thyme oil, tomato extract, 2-tridecanone, triethyl citrate, 4-(2,6,6-trimethyl-1-cyclohexenyl)2-butene-4-on, 2,6,6-trimethyl-2-cyclohexene-1,4-dion, 4-(2,6,6-trimethyl-1,3-cyclohexadienyl)2-butene-4-on, 2,3,5-trimethylpyrazine, γ-undecalactone, γ-valerolactone, vanilla extract, vanillin, veratraldehyde, violet leaf absolute, citral, mandarin oil, 4-(acetoxymethyl)toluene, 2-methyl-1-butanol, 10-ethyl undecenoate, isoamyl hexanoate, 1-phenyl ethyl acetic acid, lauric acid, 8-mercaptomenthone, sinensal, and hexyl butyrate, and menthol is particularly preferably used. Also, one kind out of these flavorings may be used alone, or two or more kinds thereof may be used together.

The type of the solid flavoring is not particularly limited, and in terms of application of satisfactory smoking taste, examples thereof include a flavoring selected from cocoa powder, carob powder, coriander powder, licorice powder, orange peel powder, herb powder, flower powder, spice powder, tea powder, and the like or a combination thereof.

Also, the non-tobacco sheet may include a refreshing agent or a seasoning. The type of the refreshing agent is not particularly limited, and in terms of application of satisfactory smoking taste, examples thereof include menthol, camphor, isopulegol, cineole, mint oil, peppermint oil, eucalyptus oil, 2-1-menthoxyethanol (COOLACT (registered trademark) 5), 3-1-menthoxypropane-1,2-diol (COOLACT (registered trademark) 10), 1-menthyl-3-hydroxybutyrate (COOLACT (registered trademark) 20), p-menthane-3,8-diol (COOLACT (registered trademark) 38D), N-(2-hydroxy-2-phenylethyl)-2-isopropyl-5,5-dimethylcyclohexane-1-carboxamide (COOLACT (registered trademark) 370), N-(4-(cyanomethyl)phenyl)-2-isopropyl-5,5-dimethylcyclohexanecarboxamide (COOLACT (registered trademark) 400), N-(3-hydroxy-4-methoxyphenyl)-2-isopropyl-5,5-dimethylcyclohexanecarboxamide, N-ethyl-p-menthane-3-carbamide (WS-3), ethyl-2-(p-menthane-3-carboxamide)acetate (WS-5), N-(4-methoxyphenyl)-p-menthanecarboxamide (WS-12), 2-isopropyl-N,2,3-trimethylbutylamide (WS-23), 3-1-menthoxy-2-methylpropane-1,2-diol, 2-1-menthoxyethane-1-ol, 3-1-menthoxypropane-1-ol, 4-1-menthoxybutane-1-ol, menthyl lactate (FEMA3748), menthone glycerin acetal (FrescolatMGA, FEMA3807, FEMA3808), 2-(2-1-menthyloxyethyl)ethanol, menthyl glyoxylate, 2-pyrrolidone-5-menthyl carboxylate, menthyl succinate (FEMA3810), N-(2-(pyridine-2-yl)-ethyl)-3-p-mehtnane carboxamide (FEMA4549), N-(ethoxycarbonylmethyl)-p-menthane-3-carboxamide, N-(4-cyanomethylphenyl)-p-menthane carboxamide, and N-(4-aminocarbonylphenyl)-p-menthane. A refreshing agent may be used alone, or two or more kinds thereof may be used together.

The type of the seasoning is not particularly limited, and in terms of application of satisfactory smoking taste, examples thereof include sweeteners (sugar (glucose, fructose, isomerized sugar, caramel, and the like), acidulants (organic acids and the like), and other taste components (materials with delicious taste, bitter taste, salty taste and the like). In addition, fat (a wax, a wax material, fatty acids (short-chain, middle-chain, and long-chain fatty acids, and the like)) can be optionally added.

In a case in which a flavoring, a refreshing agent, and a seasoning are contained in shredded tobacco, although the total content thereof is not particularly limited according to an aspect, the total content is typically equal to or greater than 10000 ppm, is preferably equal to or greater than 20000 ppm, is more preferably equal to or greater than 25000 ppm, and is also typically equal to or less than 70000 ppm, is preferably 50000 ppm, is more preferably equal to or less than 40000 ppm, and is further preferably equal to or less than 33000 ppm, in terms of application of a satisfactory smoking taste. Also, the total amount is preferably equal to or greater than 2% by weight, is more preferably equal to or greater than 5% by weight, and is preferably equal to or less than 20% by weight, and is more preferably equal to or less than 10% by weight in another aspect.

Fig. 4 is a diagram illustrating an example of a section of the raw material sheet 30 in a state in which the raw material sheet 30 is accommodated in the case 20. The raw material sheet 30 in the present embodiment is folded along the first folding line such that the raw material layer 32 faces itself, and is folded along the second folding line such that the base material layer 31 faces itself. The raw material sheet 30 in the illustrated example includes the three folding lines F1, F2, and F3. Specifically, the raw material sheet 30 is folded along the folding line F1 (corresponding to the first folding line) and the folding line F3 (corresponding to the third folding line) such that the raw material layer 32 faces itself, and is folded along the folding line F2 (corresponding to the second folding line) such that the base material layer 31 faces itself. In this manner, the raw material sheet 30 includes a first clearance 34 formed by the base material layer 31 facing itself and second clearances 33 formed by the raw material layer 32 facing itself. In other words, repulsive forces caused by plastic deformation of the conductive layer 31a of the base material layer 31 and elastic deformation caused by the paper layer 31b being folded interact each other to keep a balance therebetween by folding the raw material sheet 30 along the folding lines F1, F2, and F3, and it is possible to form the first clearance 34 and the second clearances 33 without causing completely close contact in the sheet.

Note that even in a case where the base material layer 31 includes only the conductive layer 31a or the paper layer 31b, it is also possible to form the first clearance 34 and the second clearances 33 such that completely close contact does not occur in the sheet, using a force of the conductive layer 31a maintaining the shape obtained by the plastic deformation or a repulsive force caused by the elastic deformation achieved by folding the paper layer 31b. In the illustrated example, the raw material sheet 30 includes a pair of second clearances 33, and the first clearance 34 is located between the pair of second clearances 33. This can also be described by an expression that the first clearance 34 is provided between the folding line F1 and the folding line F3. Therefore, it is possible to uniformly heat the raw material layer 32 by disposing the heating blade or the susceptor of the heating portion 150 in the first clearance 34 where the base material layer 31 faces itself, and as a result, it is possible to uniformize the aerosols generated from each of the pair of second clearances 33 where the raw material layer 32 faces itself.

As illustrated in Fig. 4, the raw material sheet 30 includes a first end portion 35 where the folding line F1 or the folding line F3 is located and a second end portion 36 where the folding line F2 is located and corresponds to the side opposite to the first end portion 35. The first clearance 34 extends from the first end portion 35. Specifically, the first clearance 34 extends from the first end portion 35 toward the second end portion 36 as illustrated in Fig. 4.

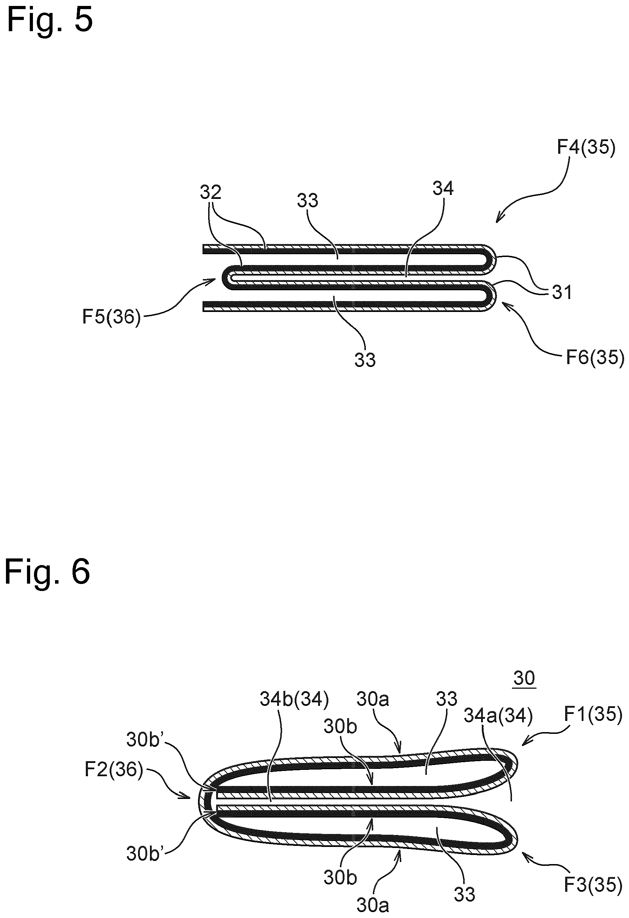

Fig. 5 is a diagram illustrating another example of the section of the raw material sheet 30 in a state in which the raw material sheet 30 is accommodated in the case 20. The raw material sheet 30 in the illustrated example includes three folding lines F4, F5, and F6. Specifically, the raw material sheet 30 is folded along the folding line F4 (corresponding to the first folding line) and the folding line F6 (corresponding to the third folding line) such that the raw material layer 32 faces itself, and is folded along the folding line F5 (corresponding to the second folding line) such that the base material layer 31 faces itself. The raw material sheet 30 illustrated in Fig. 5 has an opposite folding direction at the folding line F5 with respect to the folding line F2 of the raw material sheet 30 illustrated in Fig. 4. In this manner, the raw material sheet 30 includes a first clearance 34 formed by the base material layer 31 facing itself and second clearances 33 formed by the raw material layer 32 facing itself. In other words, it is possible to form the first clearance and the second clearance 33 without causing completely close contact in the sheet by folding the raw material sheet 30 along the folding lines F4, F5, and F6. In the illustrated example, the raw material sheet 30 includes a pair of second clearances 33, and the first clearance 34 is located between the pair of second clearances 33. In this manner, it is possible to substantially uniformly heat the raw material layer 32 located on both sides of the first clearance 34 with the heating blade or the susceptor of the heating portion 150 disposed in the first clearance 34, and as a result, it is possible to uniformize the aerosols generated from the pair of second clearances 33.

In the example illustrated in Fig. 5, the first clearance 34 also extends from the first end portion 35 similarly to the example illustrated in Fig. 4. Specifically, the first clearance 34 extends from the first end portion 35 toward the second end portion 36 as illustrated in Fig. 5.

As illustrated in Figs. 4 and 5, the raw material sheet 30 can include the second clearances 33 formed by the raw material layer 32 facing itself, and it is thus possible to allow the aerosols generated from the raw material layer 32 to pass through the second clearances 33. In other words, the second clearances 33 can define air flow paths through which the aerosols pass. In this manner, it is possible to efficiently deliver the aerosols generated from the raw material layer 32 toward the downstream side. Also, since the raw material sheet 30 includes the first clearance 34 formed by the base material layer 31 facing itself, it is possible to efficiently heat the raw material layer 32 without bringing the heating blade or the susceptor into contact with the raw material layer 32 by inserting the heating blade of the heating portion 150 or the susceptor into the first clearance 34. In this manner, contamination of the heating blade or the susceptor with the raw material layer 32 is curbed, and it is possible to reduce a frequency of cleaning of the heating blade or the susceptor.

The raw material sheet 30 is not limited to the examples illustrated in Figs. 4 and 5 and can include arbitrary folding lines. For example, the raw material sheet 30 may be folded once such that the raw material layer 32 faces itself, and the raw material sheet 30 may be folded again such that the base material layer 31 faces itself. Note that in a case where the heating portion 150 of the flavor inhaler 100 includes an induction coil, the conductive layer 31a of the raw material sheet 30 exhibits the function of the susceptor. In other words, it is possible to heat the raw material layer 32 by the conductive layer 31a being induction-heated by the induction coil. In this case, the flavor inhaler 100 may not include the susceptor.

Fig. 6 is a diagram illustrating yet another example of the section of the raw material sheet 30 in a state in which the raw material sheet 30 is accommodated in the case 20. The raw material sheet 30 illustrated in Fig. 6 includes a pair of inner folded portions 30b that are folded along the folding line F1 and the folding line F3 and are located inside the raw material sheet 30 and a pair of outer folded portions 30a that are folded along the folding line F2 and are located outside the raw material sheet 30. Note that the folding line F2 is located between the folding line F1 and the folding line F3 in a state in which the raw material sheet 30 is spread. In other words, the raw material sheet 30 illustrated in Fig. 6 includes folding lines that are similar to those of the raw material sheet 30 illustrated in Fig. 4 and includes the first clearance 34 formed by the base material layer 31 facing itself and the second clearances 33 formed by the raw material layer 32 facing itself.

However, the raw material sheet 30 illustrated in Fig. 6 is different from the raw material sheet 30 illustrated in Fig. 4 in that a part of the first clearance 34 is larger than another part of the first clearance 34 in order to allow the heating blade or the susceptor to be inserted thereinto. Specifically, the size of a first clearance 34a between the folding line F1 and the folding line F3 is larger than the size of a first clearance 34b between end portions 30b' on the side opposite to the folding line F1 or the folding line F3 of the pair of inner folded portions 30b in the example illustrated in Fig. 6. In this manner, the heating blade or the susceptor is easily inserted into the relatively large first clearance 34a.

It is possible to set the size of the first clearance 34a between the folding line F1 and the folding line F3 to be larger than the size of the first clearance 34b between the end portions 30b' of the inner folded portions 30b as illustrated in Fig. 6 by adjusting the length of the inner folded portions 30b. Specifically, it is possible to set the length of the outer folded portions 30a (the length from the folding line F1 or the folding line F3 to the folding line F2 in the section illustrated in Fig. 6) to, for example, 10.5 mm and to set the length of the inner folded portions 30b (the length from the folding line F1 or the folding line F3 to the end portions 30b' on the opposite side in the section illustrated in Fig. 6) to, for example, 9.5 mm. In this case, when the raw material sheet 30 is folded along the folding line F1, the folding line F2, and the folding line F3, the end portions 30b' of the inner folded portions 30b come into contact with the vicinity of the folding line F2 of the outer folded portions 30a as illustrated in the drawing. At this time, each of the inner folded portions 30b receives a stress directed toward the folding line F1 or the folding line F3 from the outer folded portions 30a. In this manner, each of the inner folded portion 30b is bent to be warped, the folding line F1 and the folding line F3 are separated from each other, and the size of the first clearance 34a between the folding line F1 and the folding line F3 increases.

Not limited thereto, and it is possible to fold the raw material sheet 30 such that the size of the first clearance 34a between the folding line F1 and the folding line F3 is larger than the size of the first clearance 34b between the pair of end portions 30b' of the inner folded portions 30b on the side opposite to the folding line F1 and the folding line F3 by adjusting a force applied when the raw material sheet 30 is folded in a case where the raw material sheet 30 can maintain the shape by plastic deformation, for example.

Although the raw material sheet 30 illustrated in Fig. 6 is formed by a folding method that is similar to that for the raw material sheet 30 illustrated in Fig. 4, the present invention is not limited thereto. The raw material sheet 30 can include arbitrary folding lines with which the size of the first clearance 34a between the folding lines is larger than the size of the first clearance 34b between the end portions 30b' of the inner folded portions 30b.

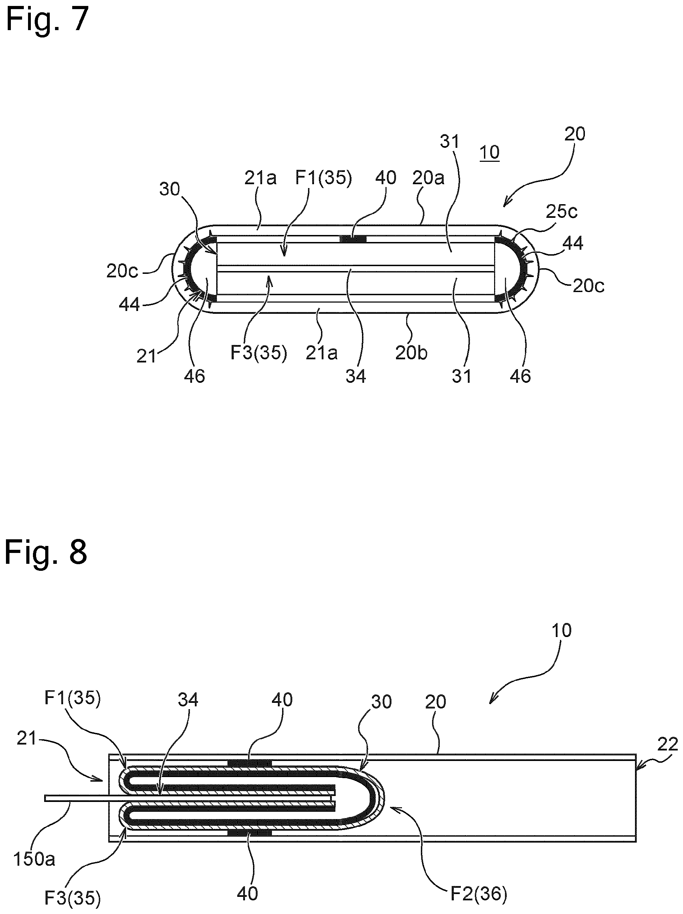

Fig. 7 is a side view of the cartridge 10 when seen from the first opening 21. Fig. 8 is a schematic sectional view illustrating the cartridge 10 when cut along the longitudinal direction. As illustrated in Figs. 7 and 8, the cartridge 10 in the present embodiment is disposed inside the case 20 such that the first end portion 35 of the raw material sheet 30 faces the first end surface 21a (first opening 21) of the case 20. In other words, the raw material sheet 30 is disposed inside the case 20 such that the distance between the first end portion 35 of the raw material sheet 30 and the first end surface 21a of the case 20 is shorter than the distance between the second end portion 36 and the first end surface 21a. In this manner, the first clearance 34 is exposed to the first opening 21 as illustrated in the drawing. Therefore, insertion of the heating portion 150 into the first clearance 34 where the base material layer 31 faces itself is facilitated when the heating blade or the susceptor of the heating portion 150 of the flavor inhaler 100 is inserted from the first opening 21. In this case, it is possible to efficiently heat the raw material layer 32 without bringing the heating blade or the susceptor into contact with the raw material layer 32 by heating the raw material sheet 30 with the heating blade, the susceptor, or the like of the heating portion 150 disposed in the first clearance 34. In this manner, contamination of the heating blade or the susceptor with the raw material layer 32 is curbed, and it is possible to reduce a frequency of cleaning of the heating blade or the susceptor. Also, vapor or aerosols generated from the raw material layer 32 can pass through the second clearances 33 where the raw material layer 32 faces itself. It is thus possible to efficiently deliver the vapor or the aerosols generated from the raw material layer 32 toward the downstream side. Note that although the raw material sheet 30 illustrated in Fig. 4 is accommodated in the case 20 in the example illustrated in Fig. 7, the raw material sheet 30 illustrated in Fig. 5 or 6 may be accommodated in the case 20 in the direction illustrated in Figs. 7 and 8.

As illustrated in Fig. 7, the raw material sheet 30 is preferably disposed inside the case 20 such that the folding line F1 is substantially orthogonal to the longitudinal direction (the direction in which the first end surface 21a and the second end surface 22a are connected or the insertion direction of the heating portion) of the case 20. It is thus possible to facilitate insertion of the heating blade or the susceptor of the heating portion 150 into the first clearance 34 along the folding line F1.

Also, the raw material sheet 30 preferably includes a mesh or an opening at the folding line F2 (see Figs. 4 to 6). In this manner, air or vapor or aerosols generated by the raw material layer 32 are sent to the second opening 22 through the mesh or the opening, and it is thus possible to efficiently send the vapor or the aerosols toward the second opening 22. Note that "the mesh or the opening" described herein can include a notch or a slit formed at the folding line F2.

Also, the pair of connecting walls 20c of the case 20 can be formed into arc shapes, more specifically circular arc shapes in the section seen from the first opening 21 as illustrated in the drawing. Note that the term "arc shapes" or the term "circular arc shapes" described herein include substantially "arc shapes" or "circular arc shapes" and include a case where the connecting walls 20c have a corner that can be visually recognized as well. In this manner, a stress applied to the connecting walls 20c is dispersed, and it is possible to improve the strength of the case 20 as compared with a case where the first wall 20a and the second wall 20b are connected with flat walls.

In a case where the raw material sheet 30 accommodated in the case 20 is the raw material sheet 30 illustrated in Fig. 4 or 6, the raw material sheet 30 is folded such that the raw material layer 32 is located inside, and it is thus possible to curb overflow of the raw material from the raw material sheet 30. Also, since the raw material layer 32 and the heater do not come into direct contact with each other, it is possible to curb contamination of the heater. Furthermore, since the first end portion 35 of the raw material sheet 30 faces the first end surface 21a of the case 20, and the second end portion 36 faces the second end surface 22a. Therefore, exposure of the second clearances 33 where the raw material layer 32 faces itself to the second opening 22 is curbed by the folding line F2 at the second end portion 36 facing the second end surface 22a, and overflow of the raw material to the second opening 22 is curved.

The connecting walls 20c include a plurality of half-cuts or debosses 25 on the inner surfaces thereof, that is, the surfaces facing the inside of the case 20. The half-cuts or debosses 25 extend between the first end surface 21a and the second end surface 22a of the case 20. The half-cuts or debosses 25 can be formed by cutting notches in the inner surfaces of the case 20, cutting parts of the inner surfaces, or compressing the inner surfaces. Also, the half-cuts or debosses 25 may be formed by laser processing. In other words, the half-cuts or debosses 25 can also be referred to as cut lines or indentation lines formed on the inner surfaces of the connecting walls 20c. The connecting walls 20c are folded along the half-cuts or debosses 25, and as a result, the connecting walls 20c are formed into arc shapes or circular arc shapes in the section seen from the first opening 21.

According to the cartridge 10 illustrated in Fig. 7, the material of the case 20 is easily folded along the half-cuts or debosses 25 when the connecting walls 20c of the case 20 are formed even if the case 20 is formed of a material having rigidity to some extent, for example, a cardboard, by the case 20 having the plurality of half-cuts or debosses 25. As a result, it is possible to appropriately bend the connecting walls 20c of the case 20. Also, the shape of the case 20 is easily maintained by the case 20 including the connecting walls 20c, as compared with a case in which the first wall 20a and the second wall 20b of the case 20 are connected with flat walls. Specifically, according to the case 20 in the present embodiment, the plurality of half-cuts or debosses 25 are deformed to collapse even if a force in a direction inclined with respect to the first wall 20a is applied to the case 20, for example, the inner surfaces of the connecting walls 20c defining the half-cuts or debosses 25 react against each other by coming into contact with each other, and the shape of the case 20 illustrated in Fig. 7 is thus easily maintained.

Also, air flow paths are provided inside the case 20 of the cartridge 10 as described above. Specifically, air flow paths 46 are provided between the raw material sheet 30 and the connecting walls 20c. In the illustrated example, an air flow path 46 is provided between the raw material sheet 30 and each of the pair of connecting walls 20c. In this manner, the vapor or the aerosols generated in the raw material layer 32 can be sent to the second opening 22 through the air flow paths 46 between the raw material sheet 30 and the connecting walls 20c. Therefore, it is possible to efficiently send the vapor or the aerosols toward the second opening 22. Additionally, it is possible to curb closing of the air flow paths 46 inside the case 20 by the shape of the case 20 being easily maintained.

The interval of the plurality of half-cuts or debosses 25 is preferably equal to or greater than 0.5 mm and equal to or less than 3.0 mm and is more preferably equal to or greater than 0.5 mm and equal to or less than 1.5 mm. Here, the interval of the plurality of half-cuts or debosses 25 means the distance between adjacent half-cuts or debosses 25 in the section illustrated in Fig. 7. If the interval of the plurality of half-cuts or debosses 25 is less than 0.5 mm, the excessively short interval may cause a difficulty in manufacturing. Also, if the interval of the plurality of half-cuts or debosses 25 is greater than 3.0 mm, it becomes necessary to increase the size of the case 20 itself to form the connecting walls 20c, and there is a likelihood that the size is not suitable as the size of the cartridge 10 of the flavor inhaler 100. Additionally, if the interval between the plurality of half-cuts or debosses 25 is equal to or less than 1.5 mm, it is possible to cause the shapes of the connecting walls 20c to approach circular arc shapes and to more appropriately disperse the stress applied to the case 20. Therefore, if the interval of the plurality of half-cuts or debosses 25 falls within the above range, it is possible to reliably form the plurality of half-cuts or debosses 25 and to form the connecting walls 20c with the size that is suitable as the size of the cartridge 10.

The depth of the plurality of half-cuts or debosses 25 is preferably equal to or greater than 30% and equal to or less than 90% and is more preferably equal to or greater than 50% and equal to or less than 80% of the thickness of the connecting walls 20c. If the depth of the plurality of half-cuts or debosses 25 is less than 30% of the thickness of the connecting walls 20c, it is difficult to bend and fold the material forming the case 20, and it may be difficult to appropriately form the connecting walls 20c. Also, if the depth of the plurality of half-cuts or debosses 25 is greater than 90% of the thickness of the connecting walls 20c, there is a concern that the strength of the case 20 itself is excessively degraded. Therefore, if the depth of the plurality of half-cuts or debosses 25 falls within the above range, it is possible to appropriately form the connecting walls 20c and also to maintain the strength of the case 20 itself.

Although the connecting walls 20c are formed into arc shapes by providing the plurality of half-cuts or debosses 25 in the case 20 illustrated in Fig. 7, the present invention is not limited thereto, and the connecting walls 20c may have arbitrary folding lines (corner portions). For example, the case 20 can have a substantially hexagonal section by the connecting walls 20c including a half-cut or a deboss 25 at a boundary of each of the first wall 20a and the second wall 20b and another half-cut or deboss 25. It is possible to cause the shapes of the sections of the connecting walls 20c to approach the arc shapes by increasing the number of half-cuts or debosses 25.

The angle between the inner wall surface that are adjacent with the half-cuts or debosses 25 regarded as boundaries when the half-cuts or debosses 25 are formed in the inner surfaces of the connecting walls 20c is preferably greater than 90 degrees and less than 180 degrees and is more preferably equal to or greater than 100 degrees and equal to or less than 150 degrees. In a case in which the section of the case 20 has a quadrangular shape, for example, a part where the angle of the wall surfaces that are adjacent with the half-cuts or debosses 25 regarded as boundaries is equal to or less than 90 degrees occurs. Even if the half-cuts or debosses 25 are formed when the case 20 is formed of a cardboard with sufficient rigidity, it is difficult to maintain the shape of the case 20 due to a strong repulsive force of the cardboard due to folding of the case 20 at an angle of equal to or less than 90 degrees. If the case 20 is formed of a cardboard that has low rigidity to such an extent that the shape of the case 20 can be maintained, the strength of the case 20 is degraded. If the above angle is equal to or greater than 100 degrees and equal to or less than 150 degrees, it is possible to cause the sectional shapes of the connecting walls 20c to be substantially arc shapes.

The plurality of half-cuts or debosses 25 are preferably provided over not less than 50% of the length between the first end surface 21a and the second end surface 22a of the case 20. If the plurality of half-cuts or debosses 25 are provided over less than 50% of the length between the first end surface 21a and the second end surface 22a of the case 20, the effect of facilitating formation of the connecting walls 20c when the material forming the case 20 is folded is low. Therefore, if the length of the plurality of half-cuts or debosses 25 is equal to or greater than the above numerical value, it is possible to easily bend the connecting walls 20c along the plurality of half-cuts or debosses 25.

Also, as illustrated in the drawing, the cartridge 10 may include an adhesive 44 provided on the plurality of half-cuts or debosses 25. In this manner, it is possible to maintain the curved shapes of the connecting walls 20c with the adhesive 44 and thereby to more firmly maintain the shape of the case 20. Also, the adhesive 44 may be configured to establish adhesin between the case 20 and the raw material sheet 30 as illustrated in Fig. 7. In this case, it is possible to maintain the curved shapes of the connecting walls 20c and to curb deviation of the raw material sheet 30 with respect to the case 20 with the adhesive 44. As the adhesive 44, it is possible to use, for example, a vinyl acetate resin-based adhesive or a carboxy methyl cellulose (CMC) adhesive.

Also, as illustrated in the drawing, the case 20 and the raw material sheet 30 can be bonded with an adhesive 40. Specifically, the inner surface of the case 20 and at least a part of the raw material sheet 30 are bonded with the adhesive 40. In this manner, positional deviation of the raw material sheet 30 with respect to the case 20 is curbed when the heating blade or the susceptor of the heating portion 150 is inserted into the first clearance 34 of the raw material sheet 30. As the adhesive 40, it is possible to use, for example, a vinyl acetate resin-based adhesive or a carboxy methyl cellulose (CMC) adhesive.

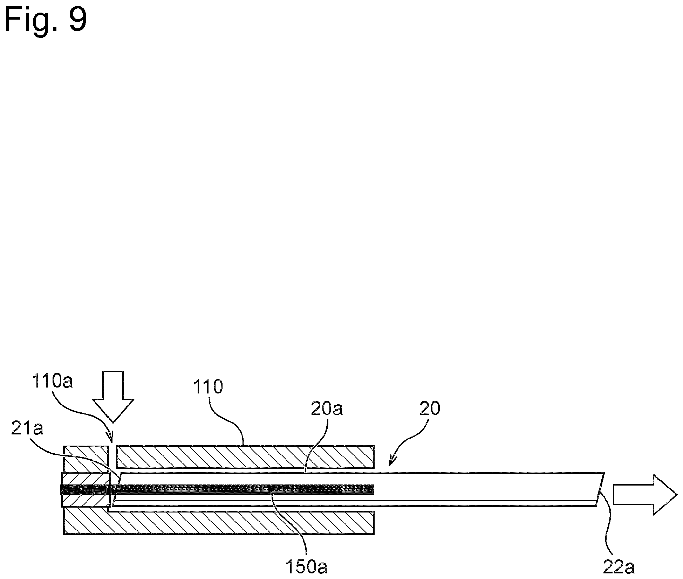

Fig. 9 is a schematic side sectional view illustrating a cartridge 10 according to another embodiment. Fig. 9 illustrates a state in which a heating blade 150a of a flavor inhaler 100 is inserted into the cartridge 10. In the example illustrated in Fig. 9, the flavor inhaler 100 includes one heating blade 150a, and a vent hole 110a is provided in a side surface of a housing 110. As illustrated in the drawing, a first end surface 21a of a case 20 is formed to be inclined with respect to a first wall 20a. It is thus possible to secure a flow path of air flowing into the cartridge 10 from the vent hole 110a formed in the side surface of the housing 110.

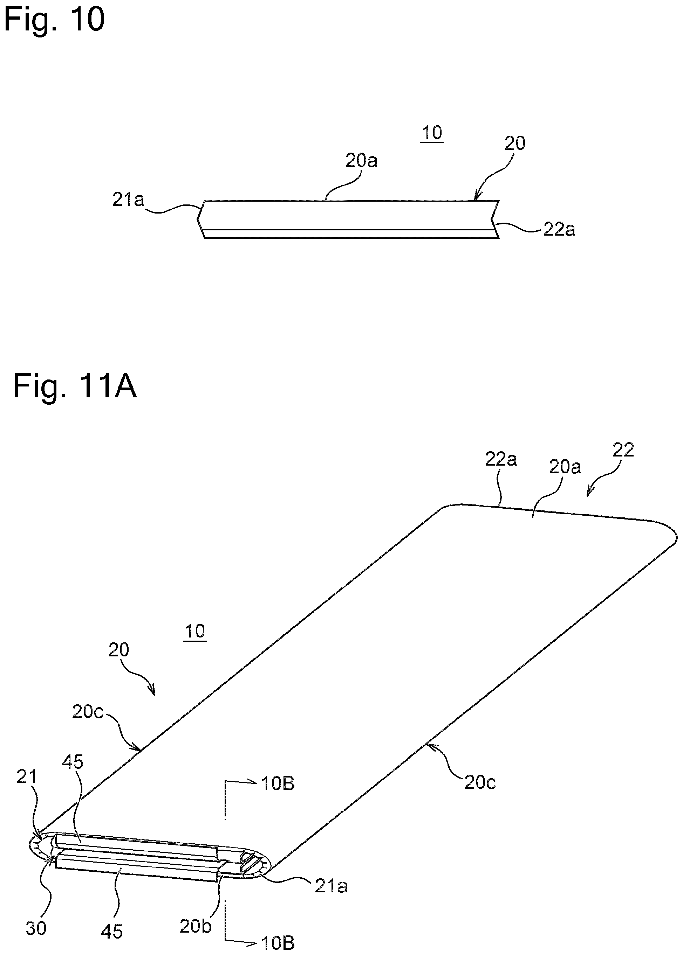

Fig. 10 is a schematic side view illustrating a cartridge 10 according to another embodiment. As illustrated in Fig. 10, a first end surface 21a of a case 20 is formed to be inclined with respect to a first wall 20a. Specifically, the first end surface 21a of the case 20 has a wedge shape in the illustrated example. It is thus possible to secure a flow path of air flowing into the cartridge 10 from a vent hole 110a formed in a side surface of a housing 110.

Note that in the example in Fig. 9, the second end surface 22a of the case 20 is also inclined with respect to the first wall 20a. Also, in the example in Fig. 10, the second end surface 22a of the case 20 has a shape that coincides with the first end surface 21a. In Figs. 9 and 10, the second end surface 22a may be orthogonal to the first wall 20a.

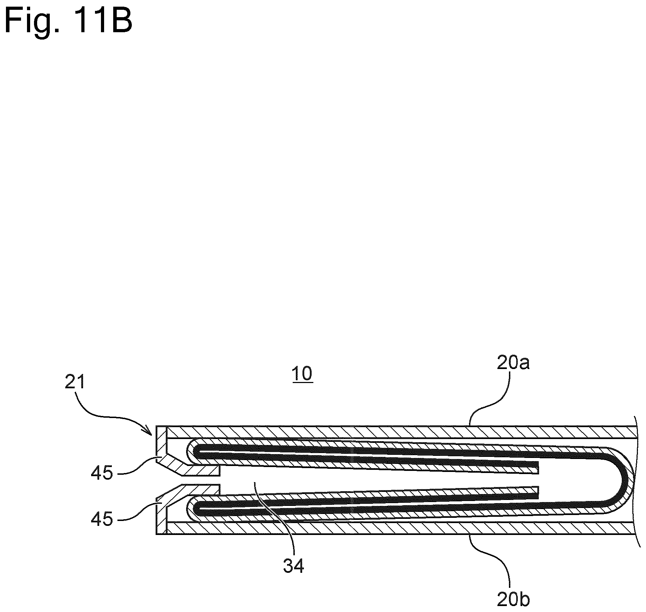

Fig. 11A is a perspective view illustrating a cartridge 10 according to another embodiment. Fig. 11B is a schematic sectional view of the cartridge 10 seen along the arrow 10B-10B illustrated in Fig. 11A. As illustrated in Figs. 11A and 11B, a case 20 of the cartridge 10 includes guide portions 45 extending between a first end surface 21a forming a first opening 21 and a first clearance 34 of a raw material sheet 30. In the illustrated example, the case 20 includes a pair of guide portions 45, and each of the guide portions 45 extends between the first end surface 21a on the side of the first wall 20a or the second wall 20b of the case 20 and the first clearance 34. In this manner, a heating blade 150a or a susceptor is guided to the first clearance 34 by the guide portions 45 when the heating blade 150a or the susceptor is inserted from the first opening 21, and it is possible to curb erroneous insertion thereof into second clearances 33.

Although the example described above has been described on the assumption that the raw material sheet 30 includes the base material layer 31 and the raw material layer 32, the present invention is not limited thereto, and the raw material sheet 30 may not include the base material layer 31. In other words, the raw material sheet 30 may be configured only of the raw material layer 32. In this case, the raw material sheet 30 can be the aforementioned tobacco sheet or non-tobacco sheet. The raw material sheet 30 can be folded along the folding lines that are similar to those in the case in which the base material layer 31 is included. However, since the raw material sheet 30 does not include the base material layer 31 in this case, the first clearance 34 where the base material layer 31 faces itself is not formed. On the other hand, the first clearances 34 can be formed without causing complete close contact of the sheet using the repulsive force caused by elastic deformation due to folding of the raw material layer 32, by folding the raw material sheet 30 along the folding lines F1, F2, and F3 or the folding lines F4, F5, and F6.

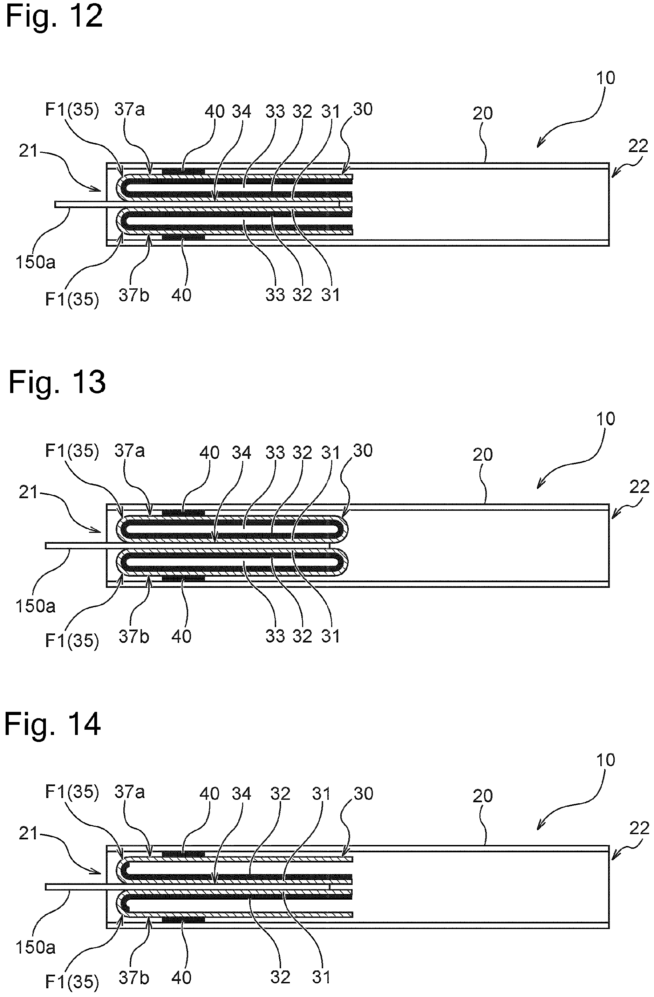

Fig. 12 is a schematic sectional view illustrating a cartridge 10 according to another embodiment. As illustrated in Fig. 12, the cartridge 10 is different from the cartridge 10 illustrated in Figs. 7 and 8 in that the raw material sheet 30 includes a plurality of sheets. Specifically, the raw material sheet 30 of the cartridge 10 illustrated in Fig. 12 includes a first sheet 38a and a second sheet 37b, each of which includes a folding line F1 (corresponding to the first folding line). In the illustrated example, each of the first sheet 37a and the second sheet 37b are configured by a base material layer 31 and a raw material layer 32 being laminated, and is folded along the folding line F1 such that the raw material layer 32 is located inside. As illustrated in Fig. 12, the first sheet 37a and the second sheet are disposed such that the base material layers 31 of the first sheet 37a and the second sheet 37b face each other. In this manner, a first clearance 34 is formed between the first sheet 37a and the second sheet 37b. Also, each of the first sheet 37a and the second sheet 37b includes a first clearance 33 therein where the raw material layer 32 faces itself. Each of the first sheet 37a and the second sheet 37b is preferably attached to the inner surface of the case 20 via an adhesive 40. As illustrated in the drawing, each of the first sheet 37a and the second sheet 37b is folded only once along the folding line F1 and is disposed such that end portions of the first sheet 37a and the second sheet 37b face the first opening 21.

Fig. 13 is a schematic sectional view illustrating a cartridge 10 according to another embodiment. As illustrated in Fig. 13, the cartridge 10 is different from the cartridge 10 illustrated in Fig. 12 in that the first sheet 37a and the second sheet 37b have tubular shapes. Specifically, each of the first sheet 37a and the second sheet 37b is formed by a base material layer 31 and a raw material layer 32 being laminated and can be formed into a tubular shape such that the raw material layer 32 is located inside. The first sheet 37a and the second sheet 37b are disposed to face each other in the thickness direction. As a result, the cartridge 10 includes a first clearance 34 formed by the base material layers 31 of the first sheet 37a and the second sheet 37b facing each other. Also, each of the first sheet 37a and the second sheet 37b includes a first clearance 34 therein where the raw material layer 32 faces itself.

Fig. 14 is a schematic sectional view illustrating a cartridge 10 according to another embodiment. As illustrated in Fig. 14, the cartridge 10 is different from the cartridge 10 illustrated in Fig. 12 in the mode in which the raw material layer 32 is laminated on the base material layer 31. Specifically, in the cartridge 10 illustrated in Fig. 12, the raw material layer 32 is laminated over the entire one-side surface of the base material layer 31. On the other hand, in the cartridge 10 illustrated in Fig. 14, the raw material layer 32 is laminated over a part of one-side surface of the base material layer 31. Specifically, the raw material layer 32 is preferably laminated on the base material layer 31 on the side of the first clearance 34 from the folding line F1 at a boundary without being laminated on the base material layer 31 on the opposite side, for example. In this manner, the raw material layer 32 is laminated only on the base material layer 31 that is heated directly by the heating blade 150a, and it is thus possible to reduce the amount of used raw material while reducing a decrease in the amount of aerosols to be generated.

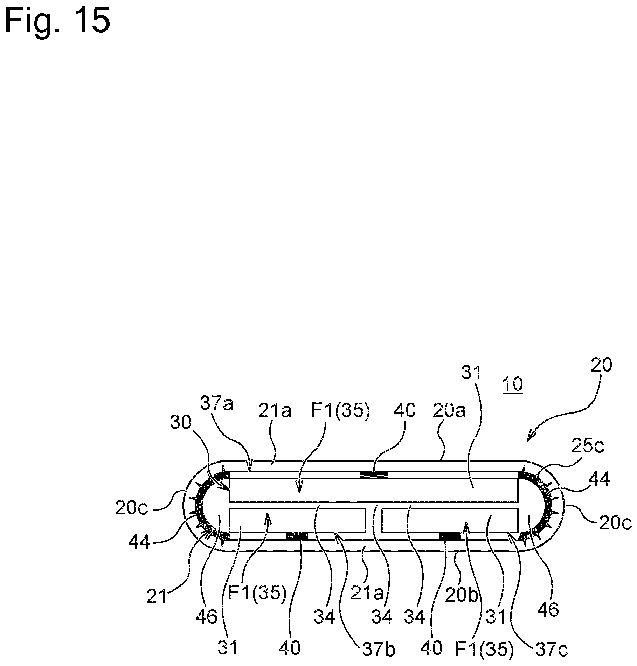

Fig. 15 is a schematic side view illustrating a cartridge 10 according to another embodiment. Fig. 15 illustrates a side surface of the cartridge 10 seen from the first opening 21. The cartridge 10 illustrated in Fig. 15 is different from the cartridge 10 illustrated in Fig. 12 in that a third sheet 37c is included in addition to the first sheet 37a and the second sheet 37b. In the illustrated example, each of the first sheet 37a, the second sheet 37b, and the third sheet 37c is formed by a base material layer 31 and a raw material layer 32 being laminated and includes a folding line F1. Also, the first sheet 37a, the second sheet 37b, and the third sheet 37c are disposed to face each other in the thickness direction, and the second sheet 37b and the third sheet 37c are disposed to be adjacent to each other in the width direction. In this manner, first clearances 34 are formed between the first sheet 37a and the second sheet 37b and between the first sheet 37a and the third sheet 37c. The first sheet 37a, the second sheet 37b, and the third sheet 37c are preferably attached to the inner surface of the case 20 via an adhesive 40.

According to the cartridges 10 illustrated in Figs. 12 to 15, the raw material sheets 30 include a plurality of sheets, and it is thus also possible to adopt sheets including different raw material layers 32. In this manner, it is possible to supply various combinations of flavors to the user and to provide new smoke tastes to the user by adopting sheets including raw material layers 32 containing mutually different components. Although a first sheet 37a, a second sheet 37b, and a third sheet are simply folded along a folding line F1 in the cartridge 10 illustrated in Fig. 15, the present invention is not limited thereto, and at least one of these sheets may be formed into a tubular shape as illustrated in Fig. 13. Similarly, the raw material layer 32 may be laminated over a part of one-side surface of the base material layer 31 as illustrated in Fig. 14 in at least one of the first sheet 37a, the second sheet 37b, and the third sheet illustrated in Fig. 15.

Although the examples described in Figs. 12 to 15 have been described on the assumption that the raw material sheets 30 have the base material layers 31 and the raw material layers 32, the present invention is not limited thereto, and the raw material sheets 30 may not include the base material layers 31. In other words, the first sheet 37a, the second sheet 37b, or the third sheet 37c configuring each raw material sheet 30 may be configured only of the raw material layer 32. In this case, the raw material sheets 30 can be the aforementioned tobacco sheets or non-tobacco sheets.

Although the heating blade 150a or the susceptor is inserted into the first clearance 34 and heats the cartridge 10 in the embodiments described above, the present invention is not limited thereto, and the raw material sheet 30 may be heated from one surface side by moving the heating blade 150a or the susceptor to the side surface of the raw material sheet 30. In this case, the heat is gradually transmitted from the one surface side of the raw material sheet 30, and it is possible to extend the smoking time.

Although the embodiments of the present invention have been described hitherto, the present invention is not limited to the above embodiments, and various modifications can be made within the scope of scope of the appended claims.

### REFERENCE SIGNS LIST

10 Cartridge
20 Case
20a First wall
20b Second wall
20c Connecting wall
21 First opening
21a First end surface
22 Second opening
22a Second end surface
30 Raw material sheet
30a Outer folded portion
30b Inner folded portion
31 Base material layer
32 Raw material layer
33 Second clearance
34 First clearance
34a First clearance
34b First clearance
35 First end portion
36 Second end portion
37a First sheet
37b Second sheet
37c Third sheet
46 Air flow path
100 Flavor inhaler
F1 Folding line
F2 Folding line
F3 Folding line
F4 Folding line
F5 Folding line
F6 Folding line

## Claims

1. A flavor inhaler cartridge (10) comprising:
a raw material sheet (30) that includes a base material layer (31) and a raw material layer (32) laminated on the base material layer (31), the raw material layer configured to generate vapor or aerosols; and
a case (20) that accommodates the raw material sheet (30) therein,
wherein the raw material sheet (30) includes a first end portion (35), which is folded along a first folding line (F1,F4) such that the raw material layer (32) faces itself, at which the first folding line (F1,F4) is located, and a second end portion (36) on a side opposite to the first end portion (35),
a clearance (34) formed by the base material layer (31) facing itself extends from the first end portion (35),
the case (20) includes a first end surface (21a) provided with a heating opening (21) and a second end surface (22a) that faces the first end surface (21a) and is provided with a mouthpiece-side opening (22), and
the raw material sheet (30) is disposed inside the case (20) such that the first end portion (35) faces the first end surface (21a).

2. The flavor inhaler cartridge according to claim 1, wherein the raw material sheet (30) is disposed inside the case (20) such that the first folding line (F1, F4) is substantially orthogonal to a longitudinal direction connecting the first end surface (21a) and the second end surface (22a).

3. The flavor inhaler cartridge according to claim 1 or 2,
wherein the case (20) includes a first wall (20a), a second wall (20b) that faces the first wall (20a), and a pair of connecting walls (20c) that connect the first wall (20a) to the second wall (20b), and
air flow paths are provided between the raw material sheet (30) and the connecting walls (20c).

4. The flavor inhaler cartridge according to claim 3, wherein the connecting walls (20c) are formed into arc shapes in a section seen from the heating opening (21).

5. The flavor inhaler cartridge according to any one of claims 1 to 4, wherein the raw material sheet (30) is folded along a second folding line (F2,F5) such that the base material layer (31) faces itself, and the second folding line (F2,F5) is located at the second end portion (36).

6. The flavor inhaler cartridge according to claim 5, wherein the raw material sheet (30) includes a mesh or an opening at the second folding line (F2,F5).

7. The flavor inhaler cartridge according to any one of claims 1 to 6,
wherein the raw material sheet (30) is further folded along a third folding line (F3,F6) such that the raw material layer (31) faces itself, and
the clearance (34) is provided between the first folding line (F1,F4) and the third folding line (F3,F6).

8. The flavor inhaler cartridge according to claim 7 citing claim 5,
wherein the raw material sheet (30) includes a pair of inner folded portions (30b) that are folded along the first folding line (F1,F4) and the third folding line (F3,F6) and are located inside the raw material sheet (30) and a pair of outer folded portions (30a) that are folded along the second folding line (F2,F5) located between the first folding line (F1,F4) and the third folding line (F3,F6) and are located outside the raw material sheet (30).

9. The favor inhaler cartridge according to claim 8,
wherein a size of the clearance (34a) between the first folding line (F1,F4) and the third folding line (F3,F6) is larger than a size of the clearance (34b) between the first folding line (F1,F4) or the third folding line (F3,F6) of the pair of inner folded portions (30b) and an end portion on an opposite side.

10. A flavor inhaler cartridge (10) comprising:
a first raw material sheet (30) that includes a base material layer (31) and a raw material layer (32) laminated on the base material layer (31), the raw material layer configured to generate vapor or aerosols;
a second raw material sheet that includes a base material layer (31) and a raw material layer (32) laminated on the base material layer (31), the raw material layer configured to generate vapor or aerosols; and
a case (20) that accommodates the raw material sheets therein,
wherein each raw material sheet includes a first end portion (35), which is folded along a first folding line (F1) such that the raw material layer faces itself, at which the first folding line is located, and a second end portion on a side opposite to the first end portion,
a clearance (34) formed by the base material layer (31) of the first end portion of the first sheet facing the base material layer (31) of the first end portion of the second sheet,
the case includes a first end surface provided with a heating opening (21) and a second end surface that faces the first end surface and is provided with a mouthpiece-side opening (22), and
the raw material sheets are disposed inside the case such that the first end portion of each sheet faces the first end surface.

11. The flavor inhaler cartridge according to claim 10, comprising:
a third raw material sheet including the first folding line (F1), the third raw material sheet including a base material layer (31) and a raw material layer laminated on the base material layer, the raw material layer configured to generate vapor or aerosols, and
a clearance (34) is formed between the first sheet and the third sheet, and the second sheet and the third sheet are disposed to be adjacent to each other.

## Patentansprüche

1. Geschmacksinhalatorkartusche (10), umfassend:
eine Rohmaterialfolie (30), die eine Basismaterialschicht (31) und eine auf die Basismaterialschicht (31) laminierte Rohmaterialschicht (32) einschließt, wobei die Rohmaterialschicht so konfiguriert ist, dass sie Dampf oder Aerosole erzeugt; und
ein Gehäuse (20), das die Rohmaterialfolie (30) darin aufnimmt,
wobei die Rohmaterialfolie (30) einen ersten Endabschnitt (35), der entlang einer ersten Faltlinie (F1, F4) so gefaltet ist, dass die Rohmaterialschicht (32) sich selbst gegenüberliegt, an der sich die erste Faltlinie (F1, F4) befindet, und einen zweiten Endabschnitt (36) auf einer Seite gegenüber dem ersten Endabschnitt (35) einschließt,
ein durch die Basismaterialschicht (31), die auf sich selbst zeigt, gebildeter Freiraum (34) sich von dem ersten Endabschnitt (35) aus erstreckt,
das Gehäuse (20) eine erste Endoberfläche (21a) mit einer Heizöffnung (21) und eine zweite Endoberfläche (22a) aufweist, die der ersten Endoberfläche (21a) gegenüberliegt und mit einer mundstückseitigen Öffnung (22) versehen ist, und
die Rohmaterialfolie (30) so innerhalb des Gehäuses (20) angeordnet ist, dass der erste Endabschnitt (35) der ersten Endoberfläche (21a) zugewandt ist.

2. Geschmacksinhalatorkartusche nach Anspruch 1, wobei die Rohmaterialfolie (30) innerhalb des Gehäuses (20) so angeordnet ist, dass die erste Faltlinie (F1, F4) im Wesentlichen orthogonal zu einer Längsrichtung ist, die die erste Endoberfläche (21a) und die zweite Endoberfläche (22a) verbindet.

3. Geschmacksinhalatorkartusche nach Anspruch 1 oder 2,
wobei das Gehäuse (20) eine erste Wand (20a), eine zweite Wand (20b), die der ersten Wand (20a) gegenüberliegt, und ein Paar Verbindungswände (20c) einschließt, die die erste Wand (20a) mit der zweiten Wand (20b) verbinden, und
Luftströmungswege zwischen der Rohmaterialfolie (30) und den Verbindungswänden (20c) vorgesehen sind.

4. Geschmacksinhalatorkartusche nach Anspruch 3, wobei die Verbindungswände (20c) in einem von der Heizöffnung (21) aus gesehenen Querschnitt bogenförmig ausgebildet sind.

5. Geschmacksinhalatorkartusche nach einem der Ansprüche 1 bis 4, wobei die Rohmaterialfolie (30) entlang einer zweiten Faltlinie (F2, F5) so gefaltet wird, dass die Basismaterialschicht (31) auf sich selbst zeigt, und sich die zweite Faltlinie (F2, F5) an dem zweiten Endabschnitt (36) befindet.

6. Geschmacksinhalatorkartusche nach Anspruch 5, wobei die Rohmaterialfolie (30) an der zweiten Faltlinie (F2, F5) ein Netz oder eine Öffnung einschließt.

7. Geschmacksinhalatorkartusche nach einem der Ansprüche 1 bis 6,
wobei die Rohmaterialfolie (30) entlang einer dritten Faltlinie (F3, F6) weiter gefaltet wird, sodass die Rohmaterialschicht (31) auf sich selbst zeigt, und
der Freiraum (34) zwischen der ersten Faltlinie (F1, F4) und der dritten Faltlinie (F3, F6) vorgesehen ist.

8. Geschmacksinhalatorkartusche nach Anspruch 7 unter Bezugnahme auf Anspruch 5,
wobei die Rohmaterialfolie (30) ein Paar innerer gefalteter Abschnitte (30b) einschließt, die entlang der ersten Faltlinie (F1, F4) gefaltet sind, und sich die dritte Faltlinie (F3, F6) innerhalb der Rohmaterialfolie (30) befindet und ein Paar äußerer Faltabschnitte (30a), die entlang der zweiten Faltlinie (F2, F5) gefaltet sind, sich zwischen der ersten Faltlinie (F1, F4) und der dritten Faltlinie (F3, F6) befinden und außerhalb der Rohmaterialfolie (30) liegen.

9. Geschmacksinhalatorkartusche nach Anspruch 8,
wobei die Größe des Freiraums (34a) zwischen der ersten Faltlinie (F1, F4) und der dritten Faltlinie (F3, F6) größer ist als die Größe des Freiraums (34b) zwischen der ersten Faltlinie (F1, F4) oder der dritten Faltlinie (F3, F6) des Paares innerer gefalteter Abschnitte (30b) und einem Endabschnitt auf einer gegenüberliegenden Seite.

10. Geschmacksinhalatorkartusche (10) umfassend:
eine erste Rohmaterialfolie (30), die eine Basismaterialschicht (31) und eine auf die Basismaterialschicht (31) laminierte Rohmaterialschicht (32) einschließt, wobei die Rohmaterialschicht so konfiguriert ist, dass sie Dampf oder Aerosole erzeugt;
eine zweite Rohmaterialfolie, die eine Basismaterialschicht (31) und eine auf die Basismaterialschicht (31) laminierte Rohmaterialschicht (32) einschließt, wobei die Rohmaterialschicht so konfiguriert ist, dass sie Dampf oder Aerosole erzeugt; und
ein Gehäuse (20), das die Rohmaterialfolien aufnimmt,
wobei jede Rohmaterialfolie einen ersten Endabschnitt (35) einschließt, der entlang einer ersten Faltlinie (F1) so gefaltet ist, dass die Rohmaterialschicht sich selbst gegenüberliegt, an dem sich die erste Faltlinie befindet, und einen zweiten Endabschnitt auf einer Seite gegenüber dem ersten Endabschnitt,
ein Freiraum (34) durch die Basismaterialschicht (31) des ersten Endabschnitts der ersten Folie gebildet wird, die der Basismaterialschicht (31) des ersten Endabschnitts der zweiten Folie gegenüberliegt,
das Gehäuse eine erste Endoberfläche mit einer Heizöffnung (21) und eine zweite Endoberfläche einschließt, die der ersten Endoberfläche gegenüberliegt und mit einer mundstückseitigen Öffnung (22) versehen ist, und
wobei die Rohmaterialfolien innerhalb des Gehäuses so angeordnet sind, dass der erste Endabschnitt jeder Folie zu der ersten Endoberfläche zeigt.

11. Geschmacksinhalatorkartusche nach Anspruch 10, umfassend:
eine dritte Rohmaterialfolie mit der ersten Faltlinie (F1), wobei die dritte Rohmaterialfolie eine Basismaterialschicht (31) und eine auf die Basismaterialschicht laminierte Rohmaterialschicht einschließt, wobei die Rohmaterialschicht so konfiguriert ist, dass sie Dampf oder Aerosole erzeugt, und
einem Freiraum (34), der zwischen der ersten Folie und der dritten Folie ausgebildet ist, wobei die zweite Folie und die dritte Folie benachbart zueinander angeordnet sind.

## Revendications

1. Cartouche d'inhalateur d'arôme (10) comprenant :
une feuille de matière première (30) qui inclut une couche de matière de base (31) et une couche de matière première (32) stratifiée sur la couche de matière de base (31), la couche de matière première étant conçue pour générer de la vapeur ou des aérosols ; et
un boîtier (20) qui accueille la feuille de matière première (30) en son sein,
dans laquelle la feuille de matière première (30) inclut une première partie d'extrémité (35), qui est pliée le long d'une première ligne de pliage (F1, F4) de sorte que la couche de matière première (32) se fasse face, au niveau de laquelle la première ligne de pliage (F1, F4) est située, et une seconde partie d'extrémité (36) sur un côté opposé à la première partie d'extrémité (35),
un dégagement (34) formé par la couche de matière de base (31) se faisant face s'étend à partir de la première partie d'extrémité (35),
le boîtier (20) inclut une première surface d'extrémité (21a) dotée d'une ouverture de chauffage (21) et une seconde surface d'extrémité (22a) qui fait face à la première surface d'extrémité (21a) et est dotée d'une ouverture côté embout (22), et
la feuille de matière première (30) est disposée à l'intérieur du boîtier (20) de sorte que la première partie d'extrémité (35) fasse face à la première surface d'extrémité (21a).

2. Cartouche d'inhalateur d'arôme selon la revendication 1, dans laquelle la feuille de matière première (30) est disposée à l'intérieur du boîtier (20) de sorte que la première ligne de pliage (F1, F4) soit sensiblement orthogonale à une direction longitudinale reliant la première surface d'extrémité (21a) et la seconde surface d'extrémité (22a).

3. Cartouche d'inhalateur d'arôme selon la revendication 1 ou la revendication 2,
dans laquelle le boîtier (20) inclut une première paroi (20a), une seconde paroi (20b) qui fait face à la première paroi (20a), et une paire de parois de liaison (20c) qui relient la première paroi (20a) à la seconde paroi (20b), et
des trajets d'écoulement d'air sont disposés entre la feuille de matière première (30) et les parois de liaison (20c).

4. Cartouche d'inhalateur d'arôme selon la revendication 3, dans laquelle les parois de liaison (20c) sont formées en forme d'arc dans une section vue depuis l'ouverture de chauffage (21).

5. Cartouche d'inhalateur d'arôme selon l'une quelconque des revendications 1 à 4, dans laquelle la feuille de matière première (30) est pliée le long d'une deuxième ligne de pliage (F2, F5) de sorte que la couche de matière de base (31) se fasse face, et la deuxième ligne de pliage (F2,F5) est située au niveau de la seconde partie d'extrémité (36).

6. Cartouche d'inhalateur d'arôme selon la revendication 5, dans laquelle la feuille de matière première (30) inclut un maillage ou une ouverture au niveau de la deuxième ligne de pliage (F2, F5).

7. Cartouche d'inhalateur d'arôme selon l'une quelconque des revendications 1 à 6,
dans laquelle la feuille de matière première (30) est en outre pliée le long d'une troisième ligne de pliage (F3, F6) de sorte que la couche de matière première (31) se fasse face, et
le dégagement (34) est disposé entre la première ligne de pliage (F1, F4) et la troisième ligne de pliage (F3, F6).

8. Cartouche d'inhalateur d'arôme selon la revendication 7 citant la revendication 5,
dans laquelle la feuille de matière première (30) inclut une paire de parties pliées internes (30b) qui sont pliées le long de la première ligne de pliage (F1, F4) et de la troisième ligne de pliage (F3, F6) et sont situées à l'intérieur de la feuille de matière première (30) et une paire de parties pliées externes (30a) qui sont pliées le long de la deuxième ligne de pliage (F2, F5) située entre la première ligne de pliage (F1, F4) et la troisième ligne de pliage (F3, F6) et sont situées à l'extérieur de la feuille de matière première (30).

9. Cartouche d'inhalateur d'arôme selon la revendication 8,
dans laquelle une taille du dégagement (34a) entre la première ligne de pliage (F1, F4) et la troisième ligne de pliage (F3, F6) est supérieure à une taille du dégagement (34b) entre la première ligne de pliage (F1,F4) ou la troisième ligne de pliage (F3, F6) de la paire de parties pliées internes (30b) et une partie d'extrémité sur un côté opposé.

10. Cartouche d'inhalateur d'arôme (10) comprenant :
une première feuille de matière première (30) qui inclut une couche de matière de base (31) et une couche de matière première (32) stratifiée sur la couche de matière de base (31), la couche de matière première étant conçue pour générer de la vapeur ou des aérosols ;
une deuxième feuille de matière première qui inclut une couche de matière de base (31) et une couche de matière première (32) stratifiée sur la couche de matière de base (31), la couche de matière première étant conçue pour générer de la vapeur ou des aérosols ; et
un boîtier (20) qui accueille les feuilles de matière première en son sein,
dans laquelle chaque feuille de matière première inclut une première partie d'extrémité (35), qui est pliée le long d'une première ligne de pliage (F1) de sorte que la couche de matière première se fasse face, au niveau de laquelle la première ligne de pliage est située, et une seconde partie d'extrémité sur un côté opposé à la première partie d'extrémité,
un dégagement (34) formé par la couche de matière de base (31) de la première partie d'extrémité de la première feuille faisant face à la couche de matière de base (31) de la première partie d'extrémité de la seconde feuille,
le boîtier inclut une première surface d'extrémité dotée d'une ouverture de chauffage (21) et une seconde surface d'extrémité qui fait face à la première surface d'extrémité et est dotée d'une ouverture côté embout (22), et
les feuilles de matière première sont disposées à l'intérieur du boîtier de sorte que la première partie d'extrémité de chaque feuille fasse face à la première surface d'extrémité.

11. Cartouche d'inhalateur d'arôme selon la revendication 10, comprenant :
une troisième feuille de matière première incluant la première ligne de pliage (F1), la troisième feuille de matière première incluant une couche de matière de base (31) et une couche de matière première stratifiée sur la couche de matière de base, la couche de matière première étant conçue pour générer de la vapeur ou des aérosols, et
un dégagement (34) est formé entre la première feuille et la troisième feuille, et la deuxième feuille et la troisième feuille sont disposées de manière à être adjacentes l'une à l'autre.
